# FASCICULE DE BREVET EUROPEEN

(11) **EP 3 361 856 B1**
(45) Date de publication et mention de la délivrance du brevet: **24.02.2021**
(21) Numéro de dépôt: 16794707.6
(22) Date de dépôt: 14.10.2016
(51) Int. Cl.: E01F 8/02, A01G 9/02, C04B 28/04, C04B 28/06, C04B 28/30, E04C 2/04, C04B 111/00

(54) **PROCÉDÉ DE PRÉPARATION D'UN ÉLÉMENT DE CONSTRUCTION VÉGÉTALISÉ**
VERFAHREN ZUR VORBEREITUNG EINES BAUTEILS FÜR PFLANZEN
PROCESS FOR PREPARING A GREEN CONSTRUCTION ELEMENT

(30) Priorité: 14.10.2015 FR 1559761
(43) Date de publication de la demande: 22.08.2018
(73) Titulaire: Holcim Technology Ltd, 6300 Zug (CH)
(72) Inventeur: LECOMTE, Gilles, 38291 Saint Quentin Fallavier (FR); RILEY, Benjamin, 38291 Saint Quentin Fallavier (FR); DE LARRARD, François, 38291 Saint Quentin Fallavier (FR); DUBOIS-BRUGGER, Isabelle, 38291 Saint Quentin Fallavier (FR)
(74) Mandataire: Regimbeau
(86) Numéro de dépôt international: PCT/FR2016/052668
(87) Numéro de publication internationale: WO 2017/064444

(56) Documents cités:
- EP-A1- 0 736 587
- WO-A1-2005/120209
- WO-A1-2011/086518
- DE-A1- 3 222 781
- FR-A1- 2 895 752
- FR-A1- 2 961 806
- FR-A1- 2 997 944
- JP-A- H10 231 576
- JP-A- 2000 204 556
- Stéphan Assié: "Durabilité des bétons autoplaçants", INSA Toulouse, 29 octobre 2004 (2004-10-29), XP055287141, INSA-UPS Génie Civil, 135 avenue de Rangueil, 31077 Toulouse cedex 4 Extrait de l'Internet: URL:http://eprint.insa-toulouse.fr/68/ [extrait le 2016-07-08]

## Description

La présente invention concerne le domaine de la végétalisation des objets dans le domaine de la construction, en particulier des murs. La présente invention se rapporte à un procédé de préparation d'un élément de construction végétalisé comprenant des semences qui peuvent germer et former une plante.

La végétalisation des éléments de construction est une pratique de plus en plus répandue et de plus en plus recherchée, notamment pour des questions esthétiques, d'isolation thermique ou phonique et de qualité de l'air ou de l'eau. La végétalisation apporte ainsi une véritable contribution à la qualité de vie des habitants des zones urbaines.

Dans le domaine de la stabilisation des sols, des liants hydrauliques, comprenant des graines/semences, destinés à être projeté sur le sol à végétaliser ont déjà été proposés (cf. par exemple EP 736 587). Toutefois, outre les problématiques rencontrées pour réussir à faire germer les graines/semences, ces liants ne sont destinés qu'à recouvrir des surfaces relativement horizontales. Il n'est pas envisageable d'utiliser de tels liants pour fabriquer des éléments de constructions, notamment des murs.

Il existe déjà des procédés permettant de végétaliser des murs. Toutefois, les procédés existants, comme Skyflor® (WO2011/086518), sont extrêmement coûteux. Ils reposent sur un système complexe basé sur un élément porteur et une céramique très poreuse. Entre l'élément porteur et la céramique très poreuse se trouve de la terre avec des nutriments et les graines. La céramique utilisée est très coûteuse et nécessite beaucoup d'énergie au moment de la fabrication. Un autre exemple d'élément de construction végétalisé utile pour la fabrication d'un mur de soutènement est décrit dans le document JP H10 231576 A.

D'une façon générale, tous les murs végétalisés existants sont des objets de luxe (coût au m² de plusieurs centaines d'euros), nécessitent un entretien important et sont réservés à des projets prestigieux.

Au contraire, on cherche avec la présente invention à développer une technologie pour végétaliser la ville ayant un coût initial et un coût d'entretien réduits.

Afin de répondre aux exigences des utilisateurs et au besoin de végétaliser les villes, il est devenu nécessaire de fournir des éléments de constructions végétalisés ou comprenant des semences qui peuvent germer et former une plante, faciles à fabriquer et économiques.

De manière inattendue, les inventeurs ont mis en évidence qu'il est possible de proposer un élément de construction en béton poreux directement en contact avec un enduit végétalisé ou dans lequel des semences ont préalablement été intégrées. Cet élément permettra de bâtir une construction végétalisée sur au moins une de ses surfaces verticales. En outre, pour réaliser des murs végétalisés, il est proposé de couler le béton en place verticalement.

Il est à noter que, dans les murs végétalisés existants, le béton n'intervient que comme structure supportant d'autres matériaux sur lesquels la végétation se développe (grilles métalliques, géotextiles, céramiques poreuses, bacs à fleurs, etc.). Au contraire, dans la présente invention, le béton sert lui-même de réceptacle aux graines, puis aux racines des végétaux, sans que celles-ci ne menacent sa pérennité.

### Définitions et méthodes de mesure

Par l'expression « béton autoplaçant », on entend selon la présente invention des bétons très fluides, qui se mettent en place et atteignent leur porosité cible sous le seul effet de la gravité, sans qu'il soit nécessaire de vibrer le béton pendant la mise en œuvre. Les bétons autoplaçants ont également pour propriété de conduire après durcissement à un produit final homogène, n'ayant pas subi de ségrégation. Alors que les bétons autoplaçants classiques comportent un volume de pâte liante important, supérieur à la porosité du squelette granulaire, on s'intéresse ici à des bétons poreux dont la teneur en pâte est suffisante pour permettre un serrage du squelette par gravité.

Par l'expression « liant hydraulique », on entend selon la présente invention un matériau pulvérulent qui, gâché avec de l'eau, forme une pâte qui fait prise et durcit par suite de réactions d'hydratation, et qui après durcissement, conserve sa résistance et sa stabilité même sous l'eau.

Par l'expression « liant magnésien », on entend selon la présente invention un liant hydraulique à base de magnésie et de chlorure ou sulfate de magnésium. De tels liants sont par exemple décrits dans la demande EP 378 010.

Par l'expression « ciment alumineux », on entend selon la présente invention un liant hydraulique alumineux calcique tel que le Ciment Fondu.

Par l'expression « additions minérales » ou « matériau particulaire », on entend selon la présente invention un ou plusieurs matériaux particulaires ayant un D90 inférieur à 200 µm. Le D90, également noté DV90, correspond au 90ème centile de la distribution en volume de taille des grains, c'est-à-dire que 90 % des grains ont une taille inférieure au D90 et 10 % ont une taille supérieure au D90.

Par l'expression « plastifiant/superplastifiant/réducteur d'eau », on entend selon la présente invention un adjuvant qui, sans modifier la consistance, permet de réduire la teneur en eau d'un béton donné, ou qui, sans modifier la teneur en eau, en augmente l'affaissement/l'étalement, ou qui produit les deux effets en même temps. La norme EN 934-2 spécifie que la réduction d'eau doit être supérieure à 5 %.

Par l'expression « superplastifiant » ou « superfluidifiant » ou « super réducteur d'eau » ou « haut réducteur d'eau », on entend selon la présente invention un réducteur d'eau qui permet de réduire de plus de 12 % la quantité d'eau nécessaire à la réalisation d'un béton (norme EN 934-2).

Par l'expression « verticale », on entend selon la présente invention la direction de la pesanteur terrestre, vers le centre de la terre, plus ou moins 20°, avantageusement plus ou moins 10°.

Par l'expression « construction », on entend selon la présente invention un ouvrage ou un édifice bâtis, en particulier un immeuble, une maison, un monument, un ouvrage d'art, des murs d'enceinte, ...

Dans la suite de la description, sauf indication contraire, les proportions indiquées par des pourcentages correspondent à des proportions massiques. Toutefois, la porosité d'un béton est exprimée par un pourcentage par rapport au volume du béton durci final.

### Méthode de granulométrie laser

Le D90 pour les différentes poudres a été obtenu à partir des courbes granulométriques des courbes déterminées par un granulomètre laser Malvern de type Mastersizer 3000 Scirocco. La taille des particules doit être de 0,02 µm à 2 mm. La source lumineuse était constituée par un laser rouge He-Ne (632 nm) et une diode bleue (466 nm). Le modèle optique était celui de Fraunhofer, la matrice de calcul était de type polydisperse.

### Méthode de mesure de l'étalement de la pâte du liant hydraulique

Le principe de la mesure d'étalement consiste à remplir un tronc de cône de mesure d'étalement avec la pâte du liant hydraulique (en l'absence des gravillons), à tester puis à libérer la pâte du tronc de cône de mesure d'étalement afin de déterminer le diamètre du disque obtenu quand la pâte du liant hydraulique a fini de s'étaler. Le tronc de cône de mesure d'étalement a les dimensions suivantes :
- diamètre du cercle de la base supérieure : 50 mm+/- 0,5 mm ;
- diamètre du cercle de la base inférieure : 100 mm +/- 0,5 mm ; et
- hauteur : 150 mm +/-0,5 mm.

L'ensemble de l'opération a été réalisée à 20 °C. La mesure de l'étalement a été réalisée de la façon suivante :
- Remplir le tronc de cône de référence en une seule fois avec la pâte du liant hydraulique à tester ;
- Répartir la pâte du liant hydraulique de manière homogène dans le tronc de cône ;
- Araser la surface supérieure du cône ;
- Soulever le tronc de cône verticalement ; et
- Mesurer l'étalement selon quatre diamètres à 45° avec un pied à coulisse. Le résultat de la mesure d'étalement était la moyenne des quatre valeurs à +/-1 mm.

### Méthode de mesure de la porosité d'un élément en béton poreux

Une mesure de la porosité pouvait être réalisée sur du béton frais ou du béton durci.

Sur du béton frais, la méthode a consisté à remplir de béton frais un récipient de volume interne connu (préférentiellement cylindrique et non déformable), à peser l'ensemble, à ôter au résultat de mesure la masse représentée par le récipient. La densité du béton frais correspondait au rapport entre la masse mesurée de béton et le volume interne du récipient. La compacité du béton frais correspondait au rapport entre la masse volumique du béton frais et la masse volumique théorique sans porosité du béton. Il s'agissait d'une valeur entre 0 et 1. La porosité était égale à l'unité diminuée de la compacité (1-compacité).

Sur béton durci, la méthode a consisté à utiliser une éprouvette cylindrique béton durci de 11 cm de diamètre et 22 cm de hauteur qui a été placée dans un récipient dont le volume interne correspondait aux dimensions de l'échantillon. On a rempli la totalité du volume interne du récipient avec de l'eau, l'échantillon étant alors complètement immergé dans l'eau. La porosité correspondait au rapport entre le volume d'eau ajouté et le volume interne du récipient.

### Méthode de mesure de la résistance de compression

Quelle que soit l'échéance, la résistance de compression a été mesurée sur un échantillon cylindrique ayant un diamètre de 11 cm et une hauteur de 22 cm selon la norme EN 12390-3 : 2001 « Essais pour béton durci - Partie 3 : Résistance à la compression des éprouvettes ».

L'invention a donc pour objet un procédé de préparation d'un élément d'une construction végétalisé selon l'une des revendications 1-14, ledit élément constituant une surface verticale de la construction, ledit élément comprenant :
a) un élément en béton poreux et
b) un enduit, sur au moins l'une des surfaces dudit béton poreux, directement en contact avec ladite surface, favorable au développement de végétaux comprenant un végétal ou une semence dudit végétal,
le béton poreux a, à l'état durci, avant application de l'enduit, une porosité de 10% à 40%,
ledit procédé comprenant :
- la préparation d'un élément en béton poreux par coulage en place, verticalement, d'un béton poreux autoplaçant; puis
- l'application d'un enduit ensemencé par talochage ou projection.

Ainsi, l'invention permet de végétaliser une construction sur au moins une de ses surfaces verticales.

L'élément d'une construction selon l'invention comprend un élément en béton poreux, qui constitue ainsi une partie de l'élément végétalisé, sur lequel on a appliqué un enduit.

La porosité du béton poreux permet l'ancrage racinaire et la croissance des plantes par maintien des nutriments et de l'humidité.

Selon un exemple de réalisation de la présente invention, la porosité du béton à l'état durci, avant application de l'enduit, est de 25 % à 35 %, de préférence 28 % à 35 %, plus préférentiellement de 30 % à 35 %, encore plus préférentiellement strictement supérieure à 30 %.

Il est particulièrement intéressant d'utiliser un béton poreux qui permette l'obtention d'un élément autoportant. Avantageusement, la résistance à la compression, telle que mesurée par la méthode donnée précédemment, de l'élément en béton poreux après 28 jours est d'au moins 3 MPa, avantageusement de 3 MPa à 30 MPa, plus avantageusement de 3 MPa à 15 MPa, encore plus avantageusement de 6 MPa à 13 MPa.

Il est particulièrement intéressant d'utiliser un élément en béton poreux qui soit également autoplaçant, c'est-à-dire capable de se mettre en place et d'atteindre la porosité cible sous l'effet seul de la pesanteur.

Le béton selon l'invention comprend avantageusement, par mètre cube de béton frais :
- De 300 kg à 400 kg d'un liant hydraulique et de 80 litres à 110 litres d'eau, le rapport entre la masse d'eau et la masse de liant hydraulique étant de 0,2 à 0,35,; et
- De 1050 kg à 2000 kg de granulats dont le diamètre varie de 4 mm à 15 mm

Le granulat est généralement un granulat de silice ou de calcaire ou un mélange de différents types de granulats. Il peut s'agir de granulats roulés ou concassés, de préférence un granulat roulé. Le granulat peut également être issu d'un ancien béton recyclé.

Selon un exemple de réalisation de la présente invention, le diamètre des granulats varie de 4 mm à 15 mm, de préférence de 6 mm à 10 mm.

Avantageusement, le béton ne comprend pas de sable. Ainsi, la teneur massique, par mètre cube de béton frais, en granulats dont le diamètre est inférieur à 4 mm est inférieure à 50 kg, avantageusement est nulle.

Des liants hydrauliques qui conviennent sont :
- Les liants à base de clinker Portland. Un clinker Portland est obtenu par clinkérisation à haute température d'un mélange comprenant du calcaire et de l'argile. Par exemple, un clinker Portland est un clinker tel que défini dans la norme NF EN 197-1 de février 2001 ou tel que décrit dans l'ouvrage « Lea's Chemistry of Cernent and Concrete ». Les ciments Portland incluent les ciments de laitier, de pouzzolane, de cendres volantes, de schistes brûlés, de calcaire et les ciments composés. Il s'agit par exemple d'un ciment de type CEM I, CEM II, CEM III, CEM IV ou CEM V selon la norme « Ciment » NF EN 197-1 de février 2001 ;
- les liants à base de clinker sulfoalumineux, en particulier à base de clinker sulfoalumineux bélitiques. Les clinkers sulfoalumineux bélitiques sont des clinkers ayant une faible teneur en alite, en particulier une teneur en alite inférieure ou égale à 5 % en masse, ou n'ayant pas d'alite. L'alite est une des « phases minéralogiques » (appelées « phases » dans la suite de la description) des clinkers connus du type Portland. L'alite comprend du silicate tricalcique Ca₃SiO₅. Le clinker sulfoalumineux bélitique peut par exemple être obtenu selon le procédé décrit dans la demande de brevet WO 2006/018569 ;
- les liants magnésiens. Un liant magnésien est à base de magnésie et de chlorure ou sulfate de magnésium. On utilise particulièrement un liant à base de magnésie et de sel de magnésium partiellement déshydraté, de préférence un sel de magnésium ayant un taux d'hydratation moyen, exprimé en molécules d'eau par molécule de sel de magnésium, compris entre 0 et environ 5, encore de préférence compris entre environ 2 et environ 4.
- Les liants alumineux calciques. Un liant alumineux calcique est à base d'aluminate de calcium, tel que le Ciment Fondu et est obtenu par calcination d'un mélange de bauxite et de calcaire.

Ainsi, le liant comprend avantageusement un ciment à base de clinker Portland tel que défini dans la norme européenne EN197-1 ou un ciment à base de clinker sulfoalumineux, ou un liant magnésien, ou un ciment alumineux calcique.

Le liant hydraulique peut en outre comprendre un matériau particulaire (ou addition minérale) ayant un D90 inférieur à 200 µm, ou un mélange de matériaux particulaires.

Des exemples d'additions minérales sont des cendres volantes (telles que définies dans la norme EN 450), des matériaux pouzzolaniques (tels que définis dans la norme NF P 18-513), des fumées de silice (telles que définies dans la norme NF EN 13263-1), des laitiers de haut fourneau (tels que définis dans la norme NF EN 15167-1), des schistes calcinés (tels que définis dans la norme « Ciment » NF EN 197-1 paragraphe 5.2.5), des additions calcaires (telles que définis dans la norme NF P 18-508) et des additions siliceuses (telles que définies dans la norme NF P 18-509), ou leurs mélanges.

Les additions minérales comprennent avantageusement des matériaux pouzzolaniques, ou un mélange de ceux-ci.

Des matériaux pouzzolaniques adaptés comprennent les fumées de silice, également connues sous le nom de micro-silice, qui sont un sous-produit de la production de silicium ou d'alliages de ferrosilicium. Il est connu comme un matériau pouzzolanique hautement réactif. Son principal constituant est le dioxyde de silicium amorphe. Les particules individuelles ont généralement un diamètre d'environ 5 nm à 10 nm. Les particules individuelles s'agglomèrent pour former des agglomérats de 0,1 µm à 1 µm, et puis peuvent s'agglomérer ensemble en agglomérats de 20 µm à 30 µm. Les fumées de silice ont généralement une surface spécifique BET de 10 m²/g à 30 m²/g.

D'autres matériaux pouzzolaniques comprennent des matériaux riches en aluminosilicate tels que le métakaolin, et les pouzzolanes naturelles ayant des origines volcaniques, sédimentaires, ou diagéniques.

Le matériau pouzzolanique est avantageusement choisi parmi les métakaolins, la fumée de silice et leurs mélanges.

Les additions minérales comprennent aussi le calcaire broyé, avantageusement combiné avec des matériaux pouzzolaniques. Selon une variante de l'invention, le liant hydraulique comprend en outre une addition minérale, avantageusement en une teneur telle que le pH à 28 jours de la solution interstitielle soit inférieur à 12, plus avantageusement inférieur à 11, en particulier allant de 9 à 11.

Le béton poreux, autoplaçant, selon l'invention peut comprendre un plastifiant (ou réducteur d'eau) ou un superplastifiant. De préférence, le béton comprend un superplastifiant.

Les réducteurs d'eau peuvent, par exemple, être à base d'acides lignosulfoniques, d'acides hydroxycarboxyliques ou d'hydrates de carbone traités et d'autres composés organiques spécialisés, par exemple le glycérol, l'alcool polyvinylique, le sodium alumino-méthyl-siliconate, l'acide sulfanilique et la caséine.

Un superplastifiant présente une action fluidifiante puisque, pour une même quantité d'eau, l'ouvrabilité du béton est augmentée en présence du superplastifiant. Les superplastifiants ont été classés de façon générale en quatre groupes : condensat de naphtalène formaldéhyde sulfoné (SNF) (généralement un sel de sodium) ; ou condensat de mélamine formaldéhyde sulfoné (SMF) ; des lignosulfonates modifiés (MLS) ; et autres.

Un exemple de superplastifiant de nouvelle génération comprend des composés comprenant une chaîne carbonée comprenant des hétéroatomes et ayant à une extrémité un ou plusieurs groupes phosphate. Un autre exemple de superplastifiant de nouvelle génération comprend des composés polycarboxyliques tels que les polyacrylates. Le superplastifiant est de préférence une nouvelle génération de superplastifiant, par exemple un copolymère comprenant du polyéthylène glycol comme greffon et des fonctions carboxyliques dans la chaîne principale telle qu'un éther polycarboxylique. Des polysulphonates-polycarboxylate de sodium et des polyacrylates de sodium peuvent également être utilisés. Afin de réduire la quantité totale d'alcalins, le superplastifiant peut être formulé comme un sel de calcium plutôt que d'un sel de sodium.

Le béton peut comprendre, en outre, un superplastifiant comprenant un polymère comprenant une chaîne principale à laquelle sont reliées plus de trois chaînes latérales.

De préférence, le pourcentage massique d'extrait sec du plastifiant ou de superplastifiant varie de 0,05 à 1,0 %, plus préférentiellement de 0,2 à 0,5 %, par rapport à la masse de liant hydraulique (le liant hydraulique comprenant le ciment et les éventuelles additions minérales).

D'autres adjuvants peuvent être ajoutés au béton selon l'invention, par exemple, un agent antimousse (par exemple, du polydiméthylsiloxane). Il peut s'agir également de silicones sous la forme d'une solution, d'un solide ou de préférence sous la forme d'une résine, d'une huile ou d'une émulsion, de préférence dans l'eau. Des silicones plus particulièrement adaptées comprennent les groupes caractéristiques (RSiO_{0,5}) et (R₂SiO). Dans ces formules, les radicaux R, qui peuvent être identiques ou différents, sont de préférence l'hydrogène ou un groupe alkyle de 1 à 8 atomes de carbone, le groupe méthyle étant le groupe préféré. Le nombre de groupes caractéristiques est de préférence de 30 à 120. La quantité d'un tel agent dans le béton est généralement au plus de 5 parties par poids par rapport au ciment.

Le béton selon l'invention peut également inclure des agents anti-efflorescence (pour contrôler l'efflorescence primaire et/ou secondaire). Ces agents comprennent des formulations comprenant un composé acide hydrofuge, par exemple un mélange liquide d'acide gras (par exemple un acide gras de tall oil qui peut comprendre un acide gras insoluble dans l'eau, un acide rosinique ou un mélange de ceux-ci) ou un silane-siloxane tel que défini dans le brevet FR2978759 pour l'efflorescence primaire et des mélanges aqueux comprenant une dispersion de stéarate de calcium (CSD) pour l'efflorescence secondaire. Les agents anti-efflorescence contrôlant l'efflorescence primaire et secondaire comprennent des compositions comprenant un composé acide hydrofuge, généralement choisi parmi les acides gras, les acides rosiniques et les mélanges de ceux-ci et une dispersion aqueuse de stéarate de calcium. Le terme dispersion de stéarate de calcium signifie généralement une dispersion de stéarate de calcium, de palmitate de calcium, de myristate de calcium ou une combinaison de ceux-ci. Des silicates, par exemple des silicates alcalins, peuvent également être inclus dans le béton selon l'invention pour lutter contre l'efflorescence. Des produits similaires peuvent être utilisés comme traitements de surface sur le béton durci selon l'invention.

Le béton selon l'invention peut comprendre un agent viscosant et/ou un agent de modification du seuil d'écoulement (généralement pour accroître la viscosité et/ou le seuil d'écoulement). De tels agents comprennent :
- les dérivés de cellulose, par exemple des éthers de cellulose solubles dans l'eau, tels que les éthers de carboxyméthyl, méthyl, éthyl, hydroxyéthyl et hydroxypropyl de sodium ;
- les alginates ;
- le xanthane, la carraghénine ou la gomme de guar ;
- le polyéthylène glycol et le propylène glycol ;
- l'alcool polyvinylique ; ou
- le polyacrylamide.
Un mélange de ces agents peut être utilisé.

Le béton poreux, avantageusement autoplaçant, selon l'invention peut comprendre un agent activateur qui permet d'accélérer les réactions d'hydratation des matériaux vitreux. De tels agents comprennent des sels sodique et/ou calcique.

Le béton poreux selon l'invention peut comprendre un accélérateur et/ou un retardateur.

Le béton selon l'invention peut comprendre, par mètre cube de béton frais, de 150 litres à 250 litres d'une pâte de liant hydraulique et d'eau. En particulier, le béton selon l'invention peut comprendre, par mètre cube de béton frais :
- De 180 kg à 340 kg, avantageusement 200 kg à 340 kg, de liant hydraulique ;
- De 0 kg à 140 kg, avantageusement 0 kg à 120 kg, d'une addition minérale ayant un D90 inférieur à 200 µm ;
- De 0,7 kg à 1,2 kg, avantageusement 0,8 kg à 1,0 kg, d'extrait sec de superplastifiant ;
- De 1400 kg à 1750 kg, avantageusement 1500 kg à 1600 kg, de granulats dont le diamètre varie de 4 mm à 15 mm ;
- De 80 litres à 100 litres, avantageusement 85 litres à 95 litres, d'eau.

Avantageusement, le béton selon l'invention comprend, par mètre cube de béton frais, moins de 50 kg de granulats dont le diamètre est inférieur à 4 mm (sable), plus avantageusement 0 kg de granulats dont le diamètre est inférieur à 4 mm.

La pâte de liant hydraulique a de préférence un temps de prise Vicat inférieur à 24 heures, de préférence inférieur à 10 heures.

Le rapport E/L, où E désigne la quantité d'eau en kilogramme et L la quantité de liant en kilogramme (comprenant le ciment et les additions minérales lorsque ceux-ci sont présents), varie de 0,2 à 0,35 de préférence de 0,25 à 0,35, plus préférentiellement de 0,28 à 0,35.

Le béton poreux, avantageusement autoplaçant, selon l'invention présente avantageusement un étalement, mesuré selon la méthode décrite précédemment, allant de 280 mm à 380 mm, avantageusement de 310 mm à 350 mm.

Le béton poreux peut être préparé par des méthodes connues, notamment le mélange des composants solides et de l'eau, la mise en place puis le durcissement.

Selon un exemple de réalisation, le procédé de fabrication d'un béton poreux selon l'invention peut comprendre le mélange des constituants du béton poreux, la mise en place du béton poreux, en particulier le coulage en place, dans un moule ou dans un coffrage. De préférence, le procédé de fabrication ne comprend pas d'étape de compactage du béton poreux.

L'enduit comprend avantageusement un support nutritif et éventuellement du ciment.

Selon la présente invention, un support nutritif peut être de la terre (par exemple telle que définie selon les lignes 1.1 et 1.2 du tableau 1 et les lignes 2.14 à 2.16 du tableau 2 de la norme NF U44-551 de mai 2002), du sable (par exemple tel que défini selon la ligne 1.3 du tableau 1 de la norme NF U44-551 de mai 2002), de la roche volcanique (par exemple telle que définie selon la ligne 1.4 du tableau 1 de la norme NF U44-551 de mai 2002), de l'argile (par exemple telle que définie selon la ligne 1.5 du tableau 1 de la norme NF U44-551 de mai 2002), de l'argile expansée (par exemple telle que définie selon la ligne 1.6 du tableau 1 de la norme NF U44-551 de mai 2002), du schiste expansé (par exemple tel que défini selon la ligne 1.7 du tableau 1 de la norme NF U44-551 de mai 2002), de la perlite (par exemple telle que définie selon la ligne 1.8 du tableau 1 de la norme NF U44-551 de mai 2002), de la vermiculite expansée (par exemple telle que définie selon la ligne 1.9 du tableau 1 de la norme NF U44-551 de mai 2002), du polystyrène broyé (par exemple tel que défini selon la ligne 1.10 du tableau 1 de la norme NF U44-551 de mai 2002), un substrat minéral (par exemple tel que défini selon la ligne 1.11 du tableau 1 de la norme NF U44-551 de mai 2002), une laine minérale (par exemple telle que définie selon la ligne 1.12 du tableau 1 de la norme NF U44-551 de mai 2002), une tourbe blonde de sphaignes (par exemple telle que définie selon la ligne 2.1 du tableau 2 de la norme NF U44-551 de mai 2002), une tourbe de sphaignes (par exemple telle que définie selon la ligne 2.2 du tableau 2 de la norme NF U44-551 de mai 2002), une tourbe brune (par exemple telle que définie selon la ligne 2.3 du tableau 2 de la norme NF U44-551 de mai 2002), une terre de tourbière (par exemple telle que définie selon la ligne 2.4 du tableau 2 de la norme NF U44-551 de mai 2002), une écorce de pin (par exemple telle que définie selon la ligne 2.5 du tableau 2 de la norme NF U44-551 de mai 2002), une écorce de résineux (par exemple telle que définie selon la ligne 2.6 ou 2.8 du tableau 2 de la norme NF U44-551 de mai 2002), une écorce de feuillus (par exemple telle que définie selon la ligne 2.7 ou 2.8 du tableau 2 de la norme NF U44-551 de mai 2002), une écorce compostée (par exemple telle que définie selon la ligne 2.9 du tableau 2 de la norme NF U44-551 de mai 2002), une fibre de bois (par exemple telle que définie selon la ligne 2.10 du tableau 2 de la norme NF U44-551 de mai 2002), une fibre de coco (par exemple telle que définie selon la ligne 2.11 du tableau 2 de la norme NF U44-551 de mai 2002), une matière végétale ayant subi un traitement physique et éventuellement un compostage (par exemple telle que définie selon la ligne 2.12 ou 2.13 du tableau 2 de la norme NF U44-551 de mai 2002), un substrat organo-minéral (par exemple tel que défini selon la ligne 2.17 du tableau 2 de la norme NF U44-551 de mai 2002), ou leurs mélanges.

De préférence, le support nutritif est de la terre, du terreau ou un mélange de terre et de terreau.

On entend généralement par le terme « terre » toute terre végétale, toute terre de support, tout terreau, toute terre de bruyère éventuellement forestière tels que décrits dans la norme NF U44-551 de mai 2002 (voir en particulier le tableau 1 page 10 et le tableau 2 page 21 de la norme).

On entend généralement par le terme « terre support » toute terre issue d'horizons de surface humifères ou d'horizons profonds pouvant être mélangée avec des matières minérales. Une terre support comprend généralement de 1 à 5 % en masse de matière organique par rapport à la masse sèche de terre.

On entend généralement par le terme « terre végétale » toute terre issue d'horizons de surface humifères ou d'horizons profonds pouvant être mélangée avec des matières organiques d'origine végétale, des amendements organiques et/ou des matières minérales. Une terre support comprend généralement de 3 à 15 % en masse de matière organique par rapport à la masse sèche de terre.

On entend généralement par le terme « terreau » tout mélange composé en majorité de matières organiques végétales pouvant comprendre de la matière organique, de la matière minérale, de la terre et de la matière synthétique. Un terreau comprend généralement plus de 40 % en masse de matière organique par rapport à la masse sèche de terreau.

On entend généralement par le terme « terre de bruyère » tout mélange acide composé en majorité de matières organiques végétales pouvant comprendre de la matière organique, de la matière minérale et de la matière synthétique. Une terre de bruyère comprend généralement plus de 30 % en masse de matière organique par rapport à la masse sèche de terre.

On entend généralement par le terme « terre de bruyère forestière » toute terre provenant uniquement d'horizons humifères acides de sols sableux, ne pouvant être ni mélangée ni complémentée. Une terre de bruyère forestière comprend généralement plus de 25 % en masse de matière organique par rapport à la masse sèche de terre.

De préférence, le support nutritif peut comprendre en outre un engrais (par exemple tel que défini selon la ligne 3.1 du tableau 3 de la norme NF U44-551 de mai 2002), un rétenteur d'eau de synthèse (par exemple tel que défini selon la ligne 3.2 du tableau 3 de la norme NF U44-551 de mai 2002) et/ou un agent mouillant (par exemple tel que défini selon la ligne 3.3 du tableau 3 de la norme NF U44-551 de mai 2002).

L'enduit peut comprendre, outre la terre, le terreau ou le mélange terre/terreau, des éléments favorisant la pousse d'une plante. Ces éléments peuvent en particulier être des éléments nutritifs et/ou protecteurs et/ou adhésifs et/ou stimulant la germination.

Par exemple, les éléments nutritifs peuvent être des engrais. Par exemple les éléments protecteurs peuvent être des produits phytosanitaires. Par exemple, les éléments adhésifs peuvent être de la résine. Par exemple les éléments stimulant la germination peuvent être au moins un engrais, par exemple une hormone de germination ou une hormone de croissance.

Selon un exemple particulier, les éléments nutritifs peuvent être une argile comprenant de la matière organique, ou une pouzzolane. Lorsque la plante est une légumineuse, le terreau peut également comprendre en outre des rhizobacterium.

L'enduit selon l'invention comprend une semence ou une plante, telle que cela est décrit par la suite.

L'enduit selon la présente invention peut également comprendre du ciment.

L'addition d'un faible pourcentage de ciment dans l'enduit permet une meilleure adhésion de l'enduit sur le béton poreux et une stabilité par rapport au ravinement.

De préférence, l'enduit comprend de 0 à 5 % de ciment, avantageusement 0 à 3 % de ciment, en masse par rapport à la masse totale de l'enduit.

L'enduit selon la présente invention peut également comprendre des éléments dépolluants, par exemple du charbon actif, éventuellement associé à des plantes connues pour leur action dépolluante.

Le béton poreux pourra être couplé à un béton structurel pour des questions d'étanchéité et de fonction porteuse, quand celle-ci doit être assurée par le mur.

Ainsi, l'élément de construction végétalisé selon l'invention pourra comprendre en outre une couche en béton structurel. Ce béton structurel sera avantageusement en contact direct avec la surface non végétalisée de l'élément en béton poreux.

L'élément de construction végétalisé selon l'invention peut constituer tout objet dans le domaine de la construction, en particulier des murs. L'élément de construction végétalisé constitue une surface verticale de la construction permettant ainsi de végétaliser cette surface verticale.

L'élément de construction végétalisé selon l'invention pourra comprendre un élément d'apport hydrique, notamment un élément d'arrosage, avantageusement intégré dans le béton poreux, plus avantageusement dans sa partie supérieure. Trois options peuvent être envisagées :
- un tuyau percé posé sur la surface supérieure du béton poreux ;
- un tuyau similaire inséré dans le haut de la couche en béton ;
- faire ruisseler les eaux pluviales coulant depuis la toiture dans le béton poreux.

Le béton poreux sera avantageusement coulé en place.

De préférence, l'enduit comprend de 0,03% à 0,10% d'une semence, en masse par rapport à la masse totale de l'enduit.

Par le terme « semence », on entend selon la présente invention tout élément d'un végétal apte à former une plante complète. Une semence peut par exemple être une graine, un rhizome ou une spore. Par exemple, selon l'invention, les graines, les rhizomes et les spores peuvent être choisis parmi les légumineuses, les succulentes, les calcicoles, les plantes à stolon et les plantes ligneuses.

Une plante peut par exemple être une plante à fleurs, une mousse, un lichen, un champignon ou une fougère.

On entend généralement par le terme « plante à fleurs » toute plante appartenant à la division des Magnoliophyta, également appelée angiosperme.

On entend généralement par le terme « mousse » toute plante appartenant à l'embranchement des Bryophyta. Cet embranchement comprend trois divisions : Hepaticophyta, Anthocerotophyta et Bryophyta.

On entend généralement par le terme « lichen » un végétal symbiotique formé par l'association d'une algue microscopique et d'un champignon filamenteux.

On entend généralement par le terme « champignon » une plante aux tissus peu différenciés, sans chlorophylle, formés de réseaux de filaments, et qui se reproduit à l'aide de spores.

On entend généralement par le terme « fougère » toute plante appartenant à la division des Pteridophyta.

On entend généralement par le terme « légumineuse » toute plante appartenant à la famille des Fabaceae. Par exemple, les légumineuses peuvent appartenir à une sous-famille choisie parmi les Caesalpinoideae, les Mimosoideae et les Faboideae. On peut citer, par exemple, le haricot, le pois, la lentille, l'arachide, le soja, la réglisse, la luzerne, le trèfle, le lupin, les glycines ou le palissandre.

On entend généralement par le terme « succulente » toute plante capable de survivre dans des milieux arides. Par exemple, les succulentes peuvent appartenir à une famille choisie parmi les Aizoaceae, les Agavaceae, les Apocynaceae, les Asphodelaceae, les Cactaceae, les Crassulaceae, les Cucurbitaceae, les Didiereaceae, les Euphorbiaceae, les Geraniaceae et les Portulacaceae.

On entend généralement par le terme « calcicole » toute plante capable de survivre sur les sols riches en calcium. Par exemple, les calcicoles peuvent être choisies parmi Sansevieria, Titanopsis, Thelocactus, Bupleurum falcatum, Digitalis lutea, Geranium sanguineum, Helleborus foetidus, Hepatica nobilis, Inula conyza, Lactuca perennis, Laserpitium latifolium, Origanum vulgare, Teucrium chamaedrys, Orchis mascula et Orchis purpurea.

On entend généralement par le terme « plante à stolon » toute plante possédant ou capable de produire un stolon. Par exemple, la plante à stolon peut appartenir à un genre choisi parmi Argentina, Cynodon, Fragaria, Pilosella. Par exemple la plante à stolon peut être Zoysia japonica ou Ranunculus repens.

On entend généralement par le terme « plante ligneuse » toute plante qui fabrique des lignines, c'est-à-dire des macromolécules donnant à la plante sa solidité. Le bois, qui comprend de la cellulose et des lignines, est le principal tissu de structure des plantes ligneuses. Par exemple, une plante ligneuse peut être un arbre, un arbuste, un arbrisseau, une liane ou un sous-arbrisseau. Les plantes ligneuses sont particulièrement adaptées pour la stabilisation des sols, notamment grâce à leurs racines rigides.

De préférence, les semences peuvent être préparées avant leur utilisation dans l'enduit selon la présente invention, afin de favoriser la pousse d'une plante. Les semences peuvent par exemple être enrobées, totalement ou partiellement, d'une gangue, ladite gangue comprenant éléments favorisant la pousse d'une plante, tels que ceux décrits précédemment.

La préparation pour favoriser la germination des semences peut être toute préparation connue de l'homme du métier en fonction des semences utilisées. Par exemple, les semences peuvent être humidifiées par vaporisation et/ou humidifiées par trempage et/ou fendues et/ou vernalisées. Par exemple, les semences peuvent être placées dans de l'eau, dans un tissu humide ou dans du coton humide. Par exemple, les semences peuvent être humidifiées pendant une durée comprise de 1 à 5 jours, par exemple pendant 2 jours. On entend généralement par le terme « vernalisation » la période de froid subie par un végétal ou une semence nécessaire pour la faire passer du stade végétatif au stade reproductif. L'homme du métier est à même de déterminer quelle température appliquer à une semence déterminée et pendant quelle durée pour la vernaliser.
L'enduit ensemencé est avantageusement appliqué par talochage ou par projection. Le talochage consiste à appliquer l'enduit à l'aide d'une lame (règle, truelle, etc.) de façon à le faire pénétrer dans la porosité ouverte du béton poreux, en laissant une couche plane de 1 ou 2 mm d'épaisseur. La projection permet d'obtenir le même résultat, avec souvent une moindre planéité, mais avec des rendements beaucoup plus importants (technique à réserver à de grandes surfaces). Presser (talochage) ou projeter l'enduit permet la pénétration de celui-ci dans la porosité ouverte du béton drainant sur quelques centimètres

Après application de l'enduit, les semences germent et les plantes se développent sans détérioration des propriétés mécaniques de l'élément en béton poreux.

Les exemples qui suivent viennent illustrer l'invention sans en limiter la portée.

### EXEMPLES :

Dans ces exemples, les matériaux utilisés sont disponibles auprès des fournisseurs suivants :

| | |
|---|---|
| CEMI 52,5 N PM-ES-CP2-NF | LafargeHolcim, usine du Teil |
| Gravillon 6/10 | LafargeHolcim, site de St Bonnet (France) |
| Superplastifiant ADVA® Flow 450 | Grace Construction Products |
| (abrégé ADVA 450 dans les tableaux) | |
| Métakaolin | Lavollée S.A. |
| Charge calcaire | Carrière de La Vallée Heureuse |

### Méthode de préparation du béton :

Le béton poreux selon l'invention a été réalisé avec un malaxeur de type Zyclos (50 litres). L'ensemble de l'opération a été réalisé à 20°C. La méthode de préparation comprenait les étapes suivantes :
Mettre les granulats dans le bol du malaxeur ;
A T = 0 seconde : débuter le malaxage
A T = 30 secondes : ajouter l'eau de mouillage (3 à 10% de la masse de granulats secs) puis continuer à malaxer jusqu'à 90 secondes ;
A T = 90 secondes : arrêter le malaxage et laisser reposer pendant 4 minutes ;
A T = 5 minutes et 30 secondes : ajouter le liant hydraulique ;
A T = 6 minutes et 30 secondes : malaxer pendant 1 minute ;
A T = 7 minutes et 30 secondes : ajouter le reste de l'eau d'ajout en 30 secondes (tout en malaxant) ; et
A T = 8 minutes: malaxer pendant 2 minutes.

### Méthode de mesure de la densité du béton :

Une fois le béton préparé, le déposer dans un récipient de volume interne connu. La densité est le rapport entre la masse mesurée de béton et le volume interne du récipient.

Deux exemples de béton poreux selon l'invention ont été réalisés à partir des pâtes de ciment ayant les formulations (F1) et (F2) données dans le tableau suivant :

**Tableau 1**

| | F1 | F2 |
|---|---|---|
| Composant | Masse du composant en kg par mètre cube de béton frais | |
| Ciment CEMI 52,5 N PM-ES-CP2-NF | 333,6 | 179,5 |
| Granulats 6-10 mm St Bonnet | 1570,8 | 1570,9 |
| Métakaolin | | 82,5 |
| Filler calcaire | | 41,2 |
| ADVA 450 | 3,3 | 3,9 |
| Viscosant | 0,011 | |
| Eau | 90,0 | 91,0 |

Le volume de pâte de ciment était de 199 litres (F1) et de 202 litres (F2) par mètre cube de béton frais.

La pâte de liant a été réalisée en mélangeant le ciment, le cas échéant l'addition minérale, le superplastifiant et l'eau.

L'étalement de la pâte du liant hydraulique a été mesuré selon las méthode décrite ci-dessus. Les résultats sont donnés dans le tableau suivant :

**Tableau 2**

| | F1 | F2 |
|---|---|---|
| Etalement de la pâte de liant (mm) | 310 | 350 |

Les bétons poreux ont été réalisés en mélangeant les constituants dans un malaxeur et des éprouvettes cylindriques de 11 cm de diamètre et de 22 cm de hauteur ont été réalisées. La surface libre du béton poreux a été égalisée à la règle. Les éprouvettes cylindriques ont été conservées dans des conditions normalisées pour tester leur résistance à la compression à 7 jours puis à 28 jours.

Une mesure de la résistance en compression du béton a été réalisée comme cela a été décrit ci-dessus. L'éprouvette a été démoulée après 3 jours. La porosité du béton à l'état durci a été mesurée comme cela a été décrit ci-dessus.

B1 : béton obtenu avec la formulation F1 ; B2 : béton obtenu avec la formulation F2 Les résultats sont rassemblés dans le tableau suivant :

**Tableau 3**

| | B1 | B2 |
|---|---|---|
| Résistance à la compression à 7 jours (MPa) | 9,3 | 6,3 |
| Résistance à la compression à 28 jours (MPa) | 10,2 | 9,9 |
| Porosité (%) | 32 | 32 |
| Densité (28 jours) | 1,7 | 1,7 |

Un mur vertical de 90 cm de hauteur, 40 cm de largeur et 15 cm d'épaisseur a été coulé selon les méthodes de construction usuelles avec la composition de béton B1. Cette composition est validée pour l'application de cette invention parce que le mur poreux est :
- d'apparence homogène,
- perméable (test réalisé par écoulement d'eau alors que le mur était en position horizontale),
- sans cavités apparentes, et
- sans défauts de compaction apparents.

Sur des éléments en béton poreux B1 et B2, de dimensions 25 cm×25cm×10cm, on applique par talochage ou projection un enduit ensemencé comprenant ou non du ciment selon les informations données dans les tableaux suivants :

**Tableau 4 : Composition de l'enduit**

| | E1 | E2 |
|---|---|---|
| Terre | 1500 mL | 1500 mL |
| Terreau | 1500mL | 1500mL |
| Ciment | 450 mL | 0 mL |
| Eau | 1250 mL | 1250 mL |

**Tableau 5 : Types de graines et dosages**

| Graines | Dosage 1 (g/m³ de béton) | Dosage 2 (g/m³ de béton) |
|---|---|---|
| Ruta Graveolus | 198 | 396 |
| Aurinia Saxatilis | 85 | 170 |
| Cymbalaria Muralis | 21 | 42 |
| Sedum Acre | 4 | 8 |

Les 8 échantillons sont stockés et sont soumis aux mêmes conditions de lumière, d'arrosage et autres conditions environnementales. On observe une bonne germination de toutes les graines sur tous les échantillons.

## Revendications

1. Procédé de préparation d'un élément d'une construction végétalisé, constituant une surface verticale de la construction, ledit élément comprenant :
a) un élément en béton poreux et
b) un enduit sur au moins l'une des surfaces dudit béton poreux, directement en contact avec ladite surface, ledit enduit favorable au développement de végétaux comprenant un végétal ou une semence dudit végétal,
le béton poreux ayant à l'état durci, avant application de l'enduit, une porosité de 10% à 40%, de sorte à végétaliser ladite surface verticale de la construction,
ledit procédé comprenant :
- la préparation d'un élément en béton poreux par coulage en place, verticalement, d'un béton poreux autoplaçant; puis
- l'application d'un enduit ensemencé par talochage ou projection.

2. Procédé de de préparation selon la revendication 1, dans lequel l'enduit ensemencé est taloché à l'aide d'une lame telle qu'une règle ou une truelle de façon à le faire pénétrer dans la porosité ouverte du béton poreux, en laissant une couche plane de 1 ou 2 mm d'épaisseur.

3. Procédé de préparation selon la revendication 1, **caractérisé en ce que** le béton poreux a à l'état durci, avant application de l'enduit, une porosité de 30% à 35%.

4. Procédé de de préparation d'un élément d'une construction végétalisé selon l'une quelconque des revendications précédentes, **caractérisé en ce que** l'élément est en béton poreux autoportant, en particulier la résistance à la compression de l'élément en béton poreux après 28 jours est d'au moins 3 MPa, plus particulièrement de 3 MPa à 30 MPa.

5. Procédé de préparation selon l'une quelconque des revendications précédentes, **caractérisé en ce que** le béton poreux comprend par mètre cube de béton frais :
- De 300 kg à 400 kg d'un liant hydraulique et de 80 litres à 110 litres d'eau, le rapport entre la masse d'eau et la masse de liant hydraulique étant de 0,2 à 0,35 ; et
- De 1050 kg à 2000 kg de granulats dont le diamètre est de 4 mm à 15 mm.

6. Procédé de préparation selon la revendication 5, **caractérisé en ce que** le béton poreux ne comprend pas de granulats dont le diamètre est inférieur à 4 mm.

7. Procédé de préparation selon l'une quelconque des revendications 5 à 6, **caractérisé en ce que** le liant comprend un ciment à base de clinker Portland tel que défini dans la norme européenne EN197-1 ou un ciment à base de clinker sulfoalumineux, ou un liant magnésien, ou un ciment alumineux calcique.

8. Procédé de préparation selon l'une quelconque des revendications 5 à 7, **caractérisé en ce que** le liant hydraulique comprend en outre une addition minérale ayant un D90 inférieur à 200 µm, choisie parmi les matériaux pouzzolaniques, en particulier choisis parmi les métakaolins, la fumée de silice et leurs mélanges, le calcaire broyé, et leurs mélanges.

9. Procédé de préparation selon l'une quelconque des revendications 5 à 8, **caractérisé en ce que** le béton poreux comprend en outre un superplastifiant, en particulier en un pourcentage massique d'extrait sec du superplastifiant variant de 0,05% à 1,0% par rapport à la masse de liant hydraulique.

10. Procédé de préparation selon l'une quelconque des revendications 5 à 9, **caractérisé en ce que** le béton poreux comprend en outre un agent viscosant et/ou un agent de modification du seuil d'écoulement.

11. Procédé de préparation selon l'une quelconque des revendications 5 à 10, **caractérisé en ce que** le béton poreux comprend de 150 litres à 250 litres d'une pâte de liant hydraulique et d'eau par mètre cube de béton frais.

12. Procédé de préparation selon l'une quelconque des revendications précédentes, **caractérisé en ce que** l'enduit comprend un support nutritif et éventuellement du ciment.

13. Procédé de préparation selon l'une quelconque des revendications précédentes, **caractérisé en ce que** l'élément comprend en outre une couche en béton structurel, avantageusement en contact direct avec la surface non végétalisée de l'élément en béton poreux.

14. Procédé de préparation selon l'une quelconque des revendications précédentes, dans lequel l'élément intègre un élément d'apport hydrique.

## Patentansprüche

1. Verfahren zur Herstellung eines Pflanzenbauelements, das eine vertikale Fläche der Konstruktion bildet, wobei das Element umfasst:
a) ein Element aus porösem Beton und
b) eine Beschichtung auf mindestens einer der Flächen des porösen Betons, direkt im Kontakt mit der Fläche, wobei die für die Entwicklung von Pflanzen günstige Beschichtung eine Pflanze oder einen Samen der Pflanze umfasst,
wobei der poröse Beton im gehärteten Zustand vor dem Aufbringen der Beschichtung eine Porosität von 10 % bis 40 % hat, so dass die vertikale Fläche der Konstruktion begrünt wird, wobei das Verfahren umfasst:
- das Herstellen eines Elements aus porösem Beton durch vertikales Gießen vor Ort eines selbstkompaktierenden porösen Betons; dann
- das Aufbringen einer besäten Beschichtung durch Verstreichen oder Spritzen.

2. Herstellungsverfahren nach Anspruch 1, wobei die besäte Beschichtung mit Hilfe einer Lamelle wie ein Stab oder eine Kelle derart verstrichen wird, dass sie in die offene Porosität des porösen Betons eingearbeitet wird, wobei eine ebene Schicht von 1 oder 2 mm Dicke verbleibt.

3. Herstellungsverfahren nach Anspruch 1, **dadurch gekennzeichnet, dass** der poröse Beton in gehärtetem Zustand vor dem Aufbringen der Beschichtung eine Porosität von 30 % bis 35 % hat.

4. Herstellungsverfahren eines Pflanzenbauelements nach einem der vorangehenden Ansprüche, **dadurch gekennzeichnet, dass** das Element aus selbstkompaktierendem porösem Beton ist, wobei insbesondere die Druckfestigkeit des Elements aus porösem Beton nach 28 Tagen mindestens 3 MPa, im Besonderen 3 MPa bis 30 MPa beträgt.

5. Herstellungsverfahren nach einem der vorangehenden Ansprüche, **dadurch gekennzeichnet, dass** der poröse Beton je Kubikmeter Frischbeton umfasst:
- 300 kg bis 400 kg eines hydraulischen Binders und 80 Liter bis 110 Liter Wasser, wobei das Verhältnis zwischen der Masse des Wassers und der Masse des hydraulischen Binders 0,2 bis 0,35 beträgt; und
- 1050 kg bis 2000 kg Granulate, deren Durchmesser 4 mm bis 15 mm beträgt.

6. Herstellungsverfahren nach Anspruch 5, **dadurch gekennzeichnet, dass** der poröse Beton keine Granulate umfasst, deren Durchmesser kleiner als 4 mm ist.

7. Herstellungsverfahren nach einem der Ansprüche 5 bis 6, **dadurch gekennzeichnet, dass** der Binder einen Zement auf der Basis von Portlandklinker umfasst, so wie in der europäischen Norm EN 197-1 definiert, oder einen Zement auf der Basis von Sulfoaluminatklinker, oder einen Magnesiabinder oder einen Tonerde-Kalk-Zement.

8. Herstellungsverfahren nach einem der Ansprüche 5 bis 7, **dadurch gekennzeichnet, dass** der hydraulische Binder ferner einen mineralischen Zuschlag mit D90 unter 200 µm umfasst, ausgewählt aus den Puzzolan-Materialien, insbesondere ausgewählt aus dem Metakaolinen, dem Quarzstaub und deren Gemischen, dem zerkleinerten Kalk, und deren Gemischen.

9. Herstellungsverfahren nach einem der Ansprüche 5 bis 8, **dadurch gekennzeichnet, dass** der poröse Beton ferner einen Superweichmacher umfasst, insbesondere in einem Massegehalt des Trockenextrakts des Superweichmachers, der von 0,05 % bis 1,0 % in Bezug auf die Masse des hydraulischen Binders schwankt.

10. Herstellungsverfahren nach einem der Ansprüche 5 bis 9, **dadurch gekennzeichnet, dass** der poröse Beton ferner ein Viskosifizierungsmittel und/oder ein den Fließpunkt änderndes Mittel umfasst.

11. Herstellungsverfahren nach einem der Ansprüche 5 bis 10, **dadurch gekennzeichnet, dass** der poröse Beton 150 Liter bis 250 Liter eines Breis aus hydraulischem Binder und Wasser je Kubikmeter Frischbeton umfasst.

12. Herstellungsverfahren nach einem der vorangehenden Ansprüche, **dadurch gekennzeichnet, dass** die Beschichtung einen nährenden Träger und eventuell Zement umfasst.

13. Herstellungsverfahren nach einem der vorangehenden Ansprüche, **dadurch gekennzeichnet, dass** das Element ferner eine Schicht aus Strukturbeton umfasst, in vorteilhafter Weise im direkten Kontakt mit der nicht begrünten Fläche des Elements aus porösem Beton.

14. Herstellungsverfahren nach einem der vorangehenden Ansprüche, wobei das Element ein Wasserzufuhrelement integriert.

## Claims

1. Method for preparing a green construction element, forming a vertical surface of the construction, said element comprising:
a) a porous concrete element, and
b) a coating on at least one of the surfaces of said porous concrete, directly in contact with said surface, said coating which is favourable to the development of plants comprising a plant or a seed of said plant,
the porous concrete having a porosity of between 10 % and 40 % in the hardened state thereof, before application of the coating, so as to be able to render said vertical surface of the construction green,
said method comprising:
- the preparation of a porous concrete element by *in situ* pouring, vertically, of a porous self-placing concrete; then
- the application of a seeded coating by floating or spraying.

2. Preparation method according to claim 1, wherein the seeded coating is floated using a blade such as a straight edge or a trowel in such a way as to make it penetrate into the open porosity of the porous concrete, leaving a flat layer of 1 or 2 mm thickness.

3. Preparation method according to claim 1, **characterised in that** the porous concrete has a porosity of between 30 % and 35 % in the hardened state thereof, before application of the coating.

4. Method for preparing a green construction element according to any one of the preceding claims, **characterised in that** the element is made of porous self-placing concrete, in particular the compressive strength of the porous concrete element after 28 days is at least 3 MPa, more specifically between 3 MPa and 30 MPa.

5. Preparation method according to anyone of the preceding claims, **characterised in that** the porous concrete comprises per cubic metre of fresh concrete:
- 300 kg to 400 kg of a hydraulic binder and 80 litres to 110 litres of water, the ratio between the weight of water and the weight of hydraulic binder being between 0.2 and 0.35; and
- 1050 kg to 2000 kg of aggregates of which the diameter is from 4 mm to 15 mm.

6. Preparation method according to claim 5, **characterised in that** the porous concrete does not comprise aggregates of which the diameter is less than 4 mm.

7. Preparation method according to any one of claims 5 to 6, **characterised in that** the binder comprises a cement based on Portland clinker as defined in the European Standard EN 197-1 or a cement based on sulphoaluminate clinker, or a magnesia binder, or a calcium aluminate cement.

8. Preparation method according to any one of claims 5 to 7, **characterised in that** the hydraulic binder further comprises a mineral addition having a D90 less than 200 µm, selected from pozzolanic materials, in particular selected from metakaolins, silica fume and mixtures thereof, ground limestone, and mixtures thereof.

9. Preparation method according to any one of claims 5 to 8, **characterised in that** the porous concrete further comprises a superplastifier, in particular at a dry content weight percentage of the superplastifier varying from 0.05 % to 1.0 % compared to the weight of hydraulic binder.

10. Preparation method according to any one of claims 5 to 9, **characterised in that** the porous concrete further comprises a viscosity modifying agent and/or a yield stress modifying agent.

11. Preparation method according to any one of claims 5 to 10, **characterised in that** the porous concrete comprises between 150 litres and 250 litres of a hydraulic binder grout and water per cubic metre of fresh concrete.

12. Preparation method according to any one of the preceding claims, **characterised in that** the coating comprises a nutritive support and optionally cement.

13. Preparation method according to anyone of the preceding claims, **characterised in that** the element further comprises a structural concrete layer, advantageously in direct contact with the non-green surface of the porous concrete element.

14. Preparation method according to any one of the preceding claims, wherein the element integrates a water intake element.
